# EUROPÄISCHE PATENTSCHRIFT

(11) **EP 2 245 335 B1**
(45) Veröffentlichungstag und Bekanntmachung des Hinweises auf die Patenterteilung: **14.11.2012**
(21) Anmeldenummer: 09714472.9
(22) Anmeldetag: 04.02.2009
(51) Int. Cl.: F16H 3/66

(54) **MEHRSTUFENGETRIEBE**
MULTI-STAGE GEARBOX
BOÎTE DE VITESSES MULTI-ÉTAGÉE

(30) Priorität: 28.02.2008 DE 102008000428
(43) Veröffentlichungstag der Anmeldung: 03.11.2010
(73) Patentinhaber: ZF Friedrichshafen AG, 88038 Friedrichshafen (DE)
(72) Erfinder: BAUKNECHT, Gert, 88048 Friedrichshafen (DE); GUMPOLTSBERGER, Gerhard, 88045 Friedrichshafen (DE); ZIEMER, Peter, 88069 Tettnang (DE); MOHR, Mark, 88069 Tettnang (DE)
(86) Internationale Anmeldenummer: PCT/EP2009/051227
(87) Internationale Veröffentlichungsnummer: WO 2009/106408

(56) Entgegenhaltungen:
- DE-A1- 19 949 507
- DE-A1-102006 006 636

## Beschreibung

Die vorliegende Erfindung betrifft ein Mehrstufengetriebe in Planetenbauweise, insbesondere ein Automatgetriebe für ein Kraftfahrzeug, gemäß dem Oberbegriff des Patentanspruchs 1, und wie es aus dem Dokument DE 102006 006636 A1 bekannt ist.

Automatgetriebe, insbesondere für Kraftfahrzeuge, umfassen nach dem Stand der Technik Planetensätze, die mittels Reibungs- bzw. Schaltelementen, wie etwa Kupplungen und Bremsen, geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler oder einer Strömungskupplung, verbunden sind.

Ein derartiges Getriebe geht aus der EP 0 434 525 A1 hervor. Es umfasst im Wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im Wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlamellenträger den Abtrieb bildet.

Des weiteren ist aus der DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren Doppelplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Aus der DE 199 12 480 A1 ist ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder dem Sonnenrad des dritten Planetensatzes über die dritte Bremse mit dem Gehäuse verbindbar.

Des weiteren ist aus der DE 102 13 820 A1 ein Mehrgangautomatikgetriebe bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element R3 gekoppelt ist.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schalten mindestens sieben Vorwärtsgänge ohne Gruppenschaltung schaltbar sind. Der Vorschaltsatz wird aus einem Vorschalt-Planetenradsatz oder maximal zwei nicht schaltbaren, mit dem ersten Vorschalt-Planetenradsatz gekoppelten Vorschalt-Planetenradsätzen gebildet, wobei der Nachschaltsatz als Zweisteg-Vierwellen-Getriebe mit zwei schaltbaren Nachschalt-Planetenradsätzen ausgebildet ist und vier freie Wellen aufweist. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement D' und die erste freie Welle zusätzlich mit einem siebten Schaltelement zu verbinden.

Ferner ist im Rahmen der DE 101 15 987 der Anmelderin ein Mehrstufengetriebe mit mindestens sieben Gängen beschrieben. Dieses Getriebe besteht neben der Antriebswelle und der Abtriebswelle aus einem nicht schaltbaren Vorschaltradsatz und einem schaltbaren Nachschaltradsatz in Form eines Zweisteg-Vierwellen-Getriebes. Der Vorschaltradsatz besteht aus einem ersten Planetenradsatz, welcher neben der Eingangsdrehzahl der Antriebswelle eine zweite Drehzahl anbietet, die wahlweise auf einen Nachschaltradsatz geschaltet werden kann. Der Nachschaltradsatz besteht aus zwei schaltbaren Planetenradsätzen, welche mit den sechs Schaltelementen mindestens sieben Gänge schalten kann, wobei zwei Leistungswege gebildet werden. Dabei werden bei jedem Schaltvorgang in vorteilhafter Weise stets Gruppenschattungen vermieden.

Ein 9-Gang-Mehrstufengetriebe ist ferner aus der DE 29 36 969 bekannt; es umfasst acht Schaltelemente und vier Radsätze, wobei ein Radsatz als Vorschaltgetriebe dient und das Hauptgetriebe einen Simpson-Satz und einen weiteren als Umkehrgetriebe dienenden Radsatz aufweist.

Weitere Mehrstufengetriebe sind beispielsweise aus der DE 102004040597 A1, der DE 102005010210 A1 und der DE102006006637 A1 der Anmelderin bekannt.

Das gattungsbildende Dokument DE 102006006636 A1 zeigt im Planetengetriebe mit neun Vorwärts- und einem Rückwärtsgang, welches vier Planetensätze, sechs Schaltelemente und sieben drehbare Wellen umfasst.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe einen geringen Bauaufwand, insbesondere eine geringe Anzahl an Schaltelementen erfordern und bei sequentieller Schaltweise Doppelschaltungen vermeiden, so dass bei Schaltungen in definierten Ganggruppen jeweils nur ein Schaltelement gewechselt wird.

Der vorliegenden Erfindung liegt die Aufgabe zugrunde, ein Mehrstufengetriebe der eingangs genannten Art vorzuschlagen, welches mindestens neun Vorwärtsgänge und mindestens einen Rückwärtsgang mit ausreichender Übersetzung aufweist, bei dem der Bauaufwand und die Baugröße, insbesondere die Baulänge, bzw. das Gewicht optimiert werden und zudem der Wirkungsgrad hinsichtlich der Schlepp- und Verzahnungsverluste verbessert wird. Zudem sollen bei dem erfindungsgemäßen Mehrstufengetriebe geringe Stützmomente auf die Schaltelemente wirken. Insbesondere soll das erfindungsgemäße Getriebe für eine Front-Quer-Bauweise geeignet sein.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches einen Antrieb und einen Abtrieb aufweist, welche in einem Gehäuse angeordnet sind. Des weiteren sind zumindest vier vorzugsweise als Minus -Radsätze ausgebildete Planetensätze, im Folgenden als erster, zweiter, dritter und vierter Planetensatz bezeichnet, mindestens acht drehbare Wellen - im Folgenden als Antriebswelle, Abtriebswelle, dritte, vierte, fünfte, sechste, achte und neunte Welle bezeichnet - , eine nichtdrehbare Welle - im folgenden als siebte Welle bezeichnet - sowie zumindest sechs Schaltelemente, umfassend Bremsen und Kupplungen, vorgesehen, deren selektives Eingreifen verschiedene Übersetzungsverhältnisse zwischen dem Antrieb und dem Abtrieb bewirkt, so dass vorzugsweise neun Vorwärtsgänge und ein Rückwärtsgang realisierbar ist.

Gemäß der Erfindung bilden der erste und der zweite Planetensatz, die vorzugsweise als Minus-Planetensätze ausgebildet sind, einen schaltbaren Vorschaltradsatz, wobei der dritte und der vierte Planetensatz einen Hauptradsatz bilden.

Erfindungsgemäß ist bei dem Mehrstufengetriebe vorgesehen, dass die Stege des ersten und des zweiten Planetensatzes über die vierte Welle miteinander gekoppelt sind, welche mit dem Sonnenrad des dritten Planetensatzes verbunden ist, dass das Hohlrad des ersten Planetensatzes mit dem Sonnenrad des zweiten Planetensatzes über die achte Welle gekoppelt ist, welche über eine erste Kupplung mit der Antriebswelle lösbar verbindbar ist und dass das Sonnenrad des ersten Planetenradsatzes mittels der dritten Welle über eine erste Bremse an ein Gehäuse des Getriebes ankoppelbar und über eine zweite Kupplung mit der Antriebswelle lösbar verbindbar ist, wobei das Hohlrad des zweiten Planetensatzes mittels der fünften Welle über eine zweite Bremse an ein Gehäuse des Getriebes ankoppelbar ist.

Gemäß der Erfindung ist das Sonnenrad des vierten Planetensatzes über die siebte Welle ständig an ein Gehäuse des Getriebes gekoppelt, wobei die sechste Welle ständig mit dem Steg des dritten Planetensatzes verbunden und über eine dritte Kupplung mit der Antriebswelle lösbar verbindbar ist und wobei die neunte Welle ständig mit dem Hohlrad des vierten Planetensatzes verbunden und über eine vierte Kupplung mit der vierten Welle lösbar verbindbar ist; die Abtriebswelle ist gemäß der Erfindung ständig mit dem Hohlrad des dritten Planetensatzes und dem Steg des vierten Planetensatzes verbunden.

Vorzugsweise sind die den Vorschaltradsatz bildenden Planetensätze radial betrachtet übereinander angeordnet, wodurch sich die insgesamt vier Planetensätze räumlich axial betrachtet auf drei Radsatzebenen beschränken. Gemäß einer vorteilhaften Weiterbildung können zusätzlich oder alternativ dazu die den Hauptradsatz bildenden Planetensätze radial betrachtet übereinander angeordnet sein, so dass sich die insgesamt vier Planetensätze in vorteilhafter Weise räumlich axial betrachtet auf zwei Radsatzebenen beschränken können. Durch diese Konzeption kann das Getriebe axial klein dimensioniert werden, so dass eine Front - Quer - Bauweise ermöglicht wird.

Die Anordnung zweier Planetensätze übereinander kann insbesondere dann ermöglicht werden, wenn die Standübersetzungen der Planetensätze betragsmäßig hinreichend klein sind.

Durch die erfindungsgemäße Ausgestaltung des Mehrstufengetriebes ergeben sich insbesondere für Personenkraftwagen geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Des weiteren ergibt sich bei dem erfindungsgemäßen Mehrstufengetriebe ein sehr guter Wirkungsgrad in den Hauptfahrgängen bezüglich der Schlepp- und Verzahnungsverluste.

Ferner liegen geringe Momente in den Schaltelementen und in den Planetensätzen des Mehrstufengetriebes vor, wodurch der Verschleiß bei dem Mehrstufengetriebe in vorteilhafter Weise reduziert wird. Zudem wird durch die geringen Momente und die Anordnung der Planetensätze eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird.

Die Erfindung wird im Folgenden anhand der beigefügten Figuren beispielhaft näher erläutert. In diesen stellen dar:
- Figur 1:: Eine schematische Ansicht einer bevorzugten Ausführungsform eines erfindungsgemäßen Mehrstufengetriebes;
- Figur 2:: Eine schematische Ansicht einer weiteren bevorzugten Ausführungsform eines erfindungsgemäßen Mehrstufengetriebes;
- Figur 3:: Eine schematische Ansicht einer dritten bevorzugten Ausführungsform eines erfindungsgemäßen Mehrstufengetriebes;
- Figur 4:: Eine schematische Ansicht einer vierten bevorzugten Ausführungsform eines erfindungsgemäßen Mehrstufengetriebes;
- Figur 5:: Eine schematische Ansicht einer fünften bevorzugten Ausführungsform eines erfindungsgemäßen Mehrstufengetriebes; und
- Figur 6:: Ein beispielhaftes Schaltschema für ein Mehrstufengetriebe gemäß Figuren 1, 2, 3, 4 und 5.

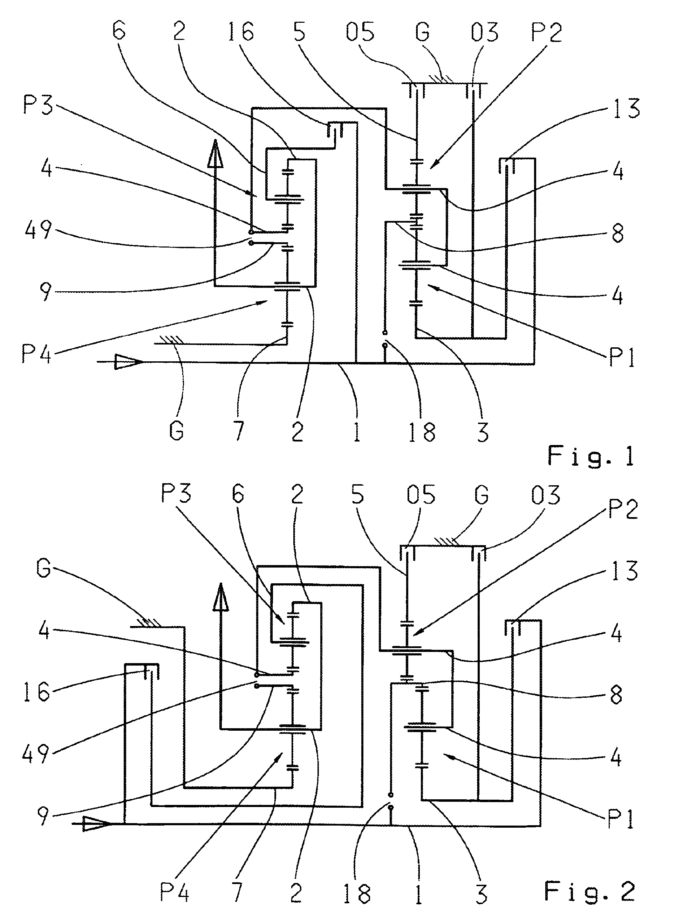

In Figur 1 ist ein erfindungsgemäßes Mehrstufengetriebe mit einer Antriebswelle 1 und einer Abtriebswelle 2 dargestellt, welche in einem Gehäuse G angeordnet sind. Es sind vier Planetensätze P1, P2, P3 und P4 vorgesehen, wobei der erste und der zweite Planetensatz P1, P2, die vorzugsweise als Minus-Planetensätze ausgebildet sind, einen schaltbaren Vorschaltradsatz bilden und wobei der dritte und der vierte Planetensatz P3, P4, die vorzugsweise ebenfalls als Minus-Planetensätze ausgebildet sind, den Hauptradsatz bilden.

Wie aus Figur 1 ersichtlich, sind sechs Schaltelemente, nämlich zwei Bremsen 03, 05 und vier Kupplungen 13, 16, 18 und 49 vorgesehen. Die räumliche Anordnung der Schaltelemente kann beliebig sein und wird nur durch die Abmessungen und die äußere Formgebung begrenzt.

Mit diesen Schaltelementen ist ein selektives Schalten von neun Vorwärtsgängen und einem Rückwärtsgang realisierbar. Das erfindungsgemäße Mehrstufengetriebe weist insgesamt acht drehbare Wellen auf, nämlich die Wellen 1, 2, 3, 4, 5, 6, 8 und 9.

Erfindungsgemäß ist bei dem Mehrstufengetriebe gemäß Figur 1 vorgesehen, dass die Stege des ersten und des zweiten Planetensatzes P1, P2 über die Welle 4 miteinander gekoppelt sind, welche mit dem Sonnenrad des Planetensatzes P3 des Hauptradsatzes verbunden ist, wobei das Hohlrad des ersten Planetensatzes P1 mit dem Sonnenrad des zweiten Planetensatzes P2 über die Welle 8 gekoppelt ist, welche über eine Kupplung 18 mit der Antriebswelle 1 lösbar verbindbar ist.

Des weiteren ist das Sonnenrad des ersten Planetensatzes P1 mittels der Welle 3 über eine Bremse 03 an ein Gehäuse G des Getriebes ankoppelbar und über eine Kupplung 13 mit der Antriebswelle 1 lösbar verbindbar, wobei das Hohlrad des zweiten Planetensatzes P2 mittels der Welle 5 über eine Bremse 05 an ein Gehäuse G des Getriebes ankoppelbar ist. Vorzugsweise weisen die Kupplung 13 und die Bremse 03 einen gemeinsamen Innenlamellenträger auf.

Ferner ist das Sonnenrad des vierten Planetensatzes P4 über die Welle 7 ständig an ein Gehäuse des Getriebes gekoppelt, wobei die Welle 6 ständig mit dem Steg des dritten Planetensatzes P3 verbunden und über die Kupplung 16 mit der Antriebswelle 1 lösbar verbindbar ist und wobei die Welle 9 ständig mit dem Hohlrad des vierten Planetensatzes P4 verbunden und über die Kupplung 49 mit der Welle 4 lösbar verbindbar ist. Erfindungsgemäß ist die Abtriebswelle 2 ständig mit dem Hohlrad des dritten Planetensatzes P3 und dem Steg des vierten Planetensatzes P4 verbunden.

Bei den in den beigefügten Figuren gezeigten Ausführungsbeispielen, das sich insbesondere für eine Front-Quer-Bauweise eignen, sind die den Vorschaltradsatz bildenden Planetensätze P1, P2 und die den Hauptradsatz bildenden Planetensätze jeweils radial betrachtet übereinander angeordnet, wodurch sich die insgesamt vier Planetensätze räumlich axial betrachtet auf zwei Radsatzebenen beschränken. Gemäß weiteren Ausführungsformen können die Planetensätze axial betrachtet in der Reihenfolge P4, P3, P2, P1 angeordnet sein.

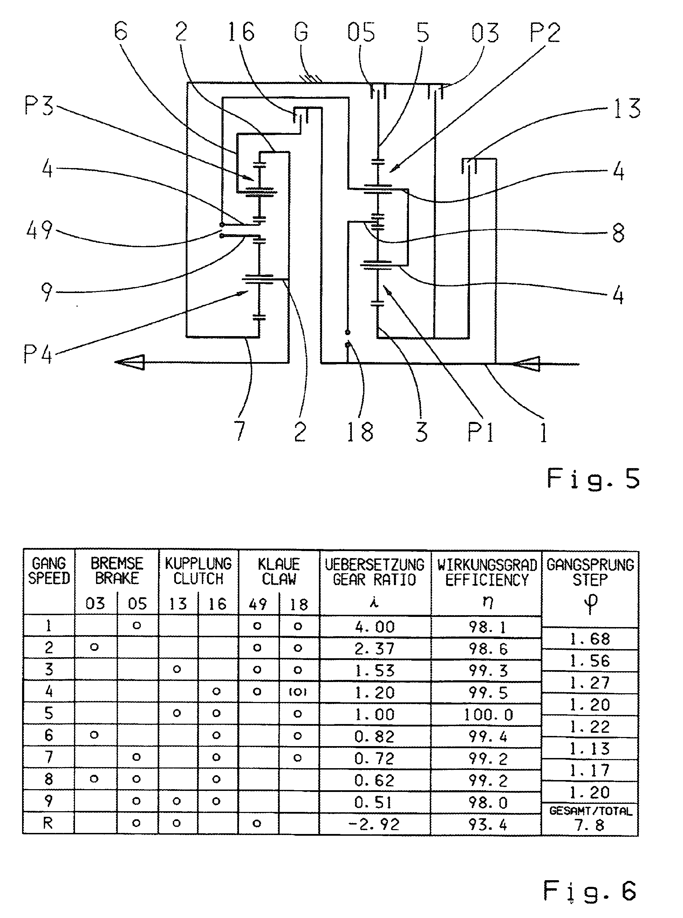

Des weiteren können, wie in Figur 1 sowie in den weiteren Figuren gezeigt, die Kupplung 18 und/oder die Kupplung 49 als formschlüssige Schaltelemente bzw. als Klauenschaltelemente ausgeführt sein; dies wird dadurch ermöglicht, dass diese Schaltelemente ausschließlich bei Hochschaltungen abgeschaltet werden, wie anhand der Beschreibung der Figur 6 erläutert wird. Die weiteren Schaltelemente sind vorzugsweise als Reibschaltelemente ausgebildet.

Wie aus Figur 1 ersichtlich sind die Kupplungen 16 und 18 axial betrachtet zwischen dem Hauptradsatz und dem Vorschaltradsatz angeordnet, was in vorteilhafter Weise darin resultiert, dass durch den Betrieb der als Reibschaltelement ausgeführten Kupplung 16 verursachte wahrnehmbare Quietschgeräusche reduziert bzw. vermieden werden.

Das in Figur 2 gezeigte Ausführungsbeispiel unterscheidet sich vom Ausführungsbeispiel gemäß Figur 1 dadurch, dass die Kupplung 16 axial betrachtet in Kraftflussrichtung vor dem Hauptradsatz angeordnet ist, so dass sich die Reihenfolge Kupplung 16, Hauptradsatz, Vorschaltradsatz ergibt.

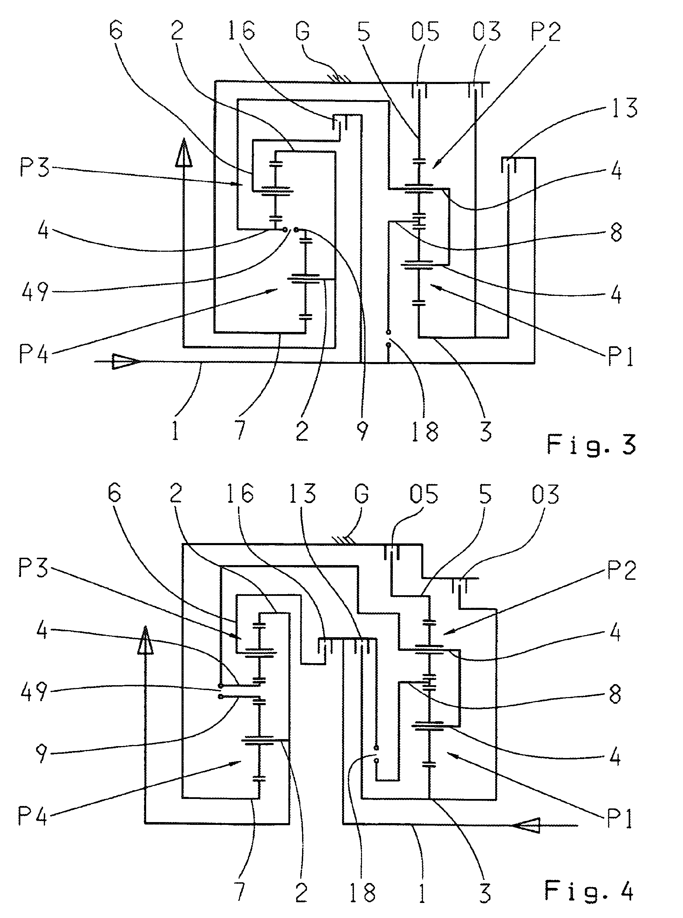

In Figur 3 ist ein weiteres Ausführungsbeispiel gezeigt, bei dem die Kupplungen 16 und 18 axial betrachtet zwischen dem Hauptradsatz und dem Vorschaltradsatz angeordnet sind, wobei im Gegensatz zu dem in Figur 1 gezeigten Getriebe die Abtriebswelle 2 durch den Radsatz P4 hindurchgeführt ist.

Das in Figur 4 dargestellte erfindungsgemäße Getriebe unterscheidet sich vom Ausführungsbeispiel gemäß Figur 1 dadurch, dass zusätzlich zu den Kupplungen 16 und 18 auch die Kupplung 13 axial betrachtet zwischen dem Hauptradsatz und dem Vorschaltradsatz angeordnet ist. Hierbei können die Kupplungen 13 und 16, für den Fall, dass sie als Lamellenschaltelemente ausgeführt sind, einen gemeinsamen Außenlamellenträger aufweisen. Durch diese Anordnung werden die von den Reibschaltelementen 13 und 16 wahrnehmbaren verursachten Geräusche signifikant reduziert bzw. vermieden. Des weiteren ist die Abtriebswelle 2 wie in Figur 2 durch den Radsatz P4 hindurchgeführt.

In Figur 5 ist ein erfindungsgemäßes Getriebe dargestellt, welches sich vom Ausführungsbeispiel gemäß Figur 3 dadurch unterscheidet, dass es in Standardbauweise mit koaxialem Antrieb und Abtrieb ausgeführt ist.

Figur 6 ist ein beispielhaftes Schaltschema eines Mehrstufengetriebes gemäß Figuren 1, 2, 3, 4 und 5, wobei angenommen wird, dass die Kupplungen 18 und 49 als Klauenschaltelemente (d.h. als Klauenkupplungen) ausgeführt sind. Für jeden Gang (mit Ausnahme des vierten Ganges) werden drei Schaltelemente geschlossen. Dem Schaltschema können die jeweiligen Übersetzungen i der einzelnen Gangstufen, der Verzahnungswirkungsgrad η und die Gangsprünge bzw. Stufensprünge φ beispielhaft entnommen werden. Wie Figur 6 zu entnehmen, beträgt der Verzahnungswirkungsgrad η in allen Vorwärtsgänge über 0,98.

Typische Werte für die Standübersetzungen der Planetensätze P1, P2, P3 und P4 sind jeweils -1,80, -1,62, -1,60 und -1,90. Aus Figur 6 wird ersichtlich, dass bei sequentieller Schaltweise Doppelschaltungen bzw. Gruppenschaltungen vermieden werden, da zwei benachbarte Gangstufen zwei Schaltelemente gemeinsam benutzen. Ferner wird ersichtlich, dass eine große Spreizung bei kleinen Gangsprüngen erzielt wird.

Des weiteren sind in vorteilhafter Weise in den Hauptfahrgängen wenige Reibschaltelemente offen: beispielsweise ist im achten und im neunten Gang lediglich ein Reibschaltelement offen, wobei im fünften, sechsten und siebten Gang zwei Reibschaltelemente nicht benötigt werden. Dadurch werden die Schleppmomente aufgrund des geringen Abstandes zwischen den Reibflächen eines Reibschaltelementes im offenen Zustand und des darin enthaltenen Öls bzw. Lüft-Öl -Gemisches reduziert.

Der erste Gang ergibt sich durch Schließen der Kupplungen 18 und 49 und der Bremse 05, der zweite Gang durch Schließen der Bremse 03 und der Kupplungen 18 und 49, der dritte Gang durch Schließen der Kupplungen 13, 49 und 18 und der vierte Gang durch Schließen der Kupplungen 16 und 49. Der vierte Gang wird nur durch den Hauptradsatz erzeugt; gemäß der Erfindung kann im vierten Gang auch zusätzlich eines der Schaltelemente des Vorschaltradsatzes 03, 05, 13, 18 geschaltet werden, welches dann lastlos bleibt.

Im gezeigten Beispiel ist stellvertretend für die Schaltelemente des Vorschaltradsatzes die Klauenkupplung 18 als optional zu schaltendes Schaltelement für den vierten Gang ausgewählt. Wenn beispielsweise im vierten Gang neben den Kupplungen 16 und 49 die Bremse 03 geschlossen ist, ist eine Rückschaltung vom achten in den vierten Gang durch Abschalten eines Schaltelementes und Zuschalten eines weiteren Schaltelementes möglich, wobei das Gleiche für eine Rückschaltung vom neunten in den vierten Gang gilt, wenn neben den Kupplungen 16 und 49 die Bremse 05 geschlossen ist.

Ferner ergibt sich der fünfte Gang, der vorzugsweise als Direktgang ausgebildet ist, durch Schließen der Kupplungen 13, 16 und 18, der sechste Gang durch Schließen der Bremse 03 und der Kupplungen 16 und 18, der siebte Gang durch Schließen der Bremse 05 und der Kupplungen 16 und 18, der achte Gang durch Schließen der Bremsen 03 und 05 und der Kupplung 16 und der neunte Gang durch Schließen der Bremse 05 und der Kupplungen 13 und 16. Wie aus dem Schaltschema ersichtlich, ergibt sich der Rückwärtsgang durch Schließen der Bremse 05 und der Kupplungen 13 und 49.

Dadurch, dass im ersten Vorwärtsgang und im Rückwärtsgang die Bremse 05 und die Kupplung 49 geschlossen sind, können diese Schaltelemente (als Reibschaltelemente ausgeführt) als Anfahrelemente eingesetzt werden.

Gemäß der Erfindung können sich auch bei gleichem Getriebeschema je nach Schaltlogik unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Reibschaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen, verwendet werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Welle
- 2: Abtriebswelle
- 3: Welle
- 4: Welle
- 5: Welle
- 6: Welle
- 7: Welle
- 8: Welle
- 9: Welle
- 03: Bremse
- 05: Bremse
- 13: Kupplung
- 16: Kupplung
- 18: Kupplung
- 49: Kupplung
- P1: Planetensatz
- P2: Planetensatz
- P3: Planetensatz
- P4: Planetensatz
- i: Übersetzung
- φ: Stufensprung
- η: Verzahnungswirkungsgrad
- G: Gehäuse

## Patentansprüche

1. Mehrstufengetriebe in Planetenbauweise, insbesondere Automatgetriebe für ein Kraftfahrzeug, umfassend eine Antriebswelle (1) und eine Abtriebswelle (2), welche in einem Gehäuse (G) angeordnet sind, vier Planetensätze (P1, P2, P3, P4), sowie sechs Schaltelemente, umfassend eine erste Bremse (03), eine zweite Bremse (05), eine erste Kupplung (13), eine zweite Kupplung (16) und eine dritte Kupplung (18), deren selektives Eingreifen verschiedene Übersetzungsverhältnisse zwischen der Antriebswelle (1) und der Abtriebswelle (2) bewirkt, so dass neun Vorwärtsgänge und ein Rückwärtsgang realisierbar sind, wobei der erste und der zweite Planetensatz (P1, P2) einen Vorschaltradsatz bilden und der dritte und der vierte Planetensatz (P3,P4) den Hauptradsatz bilden, wobei sieben drehbare Wellen vorhanden sind, nämlich eine erste Welle (1), eine zweite Welle (2), eine dritte Welle (3), eine vierte Welle (4), eine fünfte Welle (5), eine sechste Welle (6), und eine siebente Welle (8) wobei das Hohlrad des zweiten Planetensatzes (P2) mittels der fünften Welle (5) über die zweite Bremse (05) an das Gehäuse (G) des Getriebes ankoppelbar ist über eine nichtdrehbare neunte Welle (7) ständig an das Gehäuse (G) des Getriebes gekoppelt ist, wobei die sechste Welle (6) ständig mit dem Steg des dritten Planetensatzes (P3) verbunden und über die zweite Kupplung (16) mit der Antriebswelle (1) lösbar verbindbar ist, und wobei die Abtriebswelle (2) ständig mit dem Hohlrad des dritten Planetensatzes (P3) und dem Steg des vierten Planetensatzes (P4) verbunden ist, **dadurch gekennzeichnet**, das eine vierte Kupplung (49) vorhanden ist, dass der erste und zweite Planetensatz einen schaltbaren Vorschltradtz bilden, eine achte Welle (9) vorhanden ist, wobei die Stege des ersten und des zweiten Planetensatzes (P1, P2) über die vierte Welle (4) miteinander gekoppelt sind, welche mit dem Sonnenrad des dritten Planetensatzes (P3) verbunden ist, wobei das Hohlrad des ersten Planetensatzes (P1) mit dem Sonnenrad des zweiten Planetensatzes (P2) über die siebente Welle (8) gekoppelt ist, welche über die dritte Kupplung (18) mit der Antriebswelle (1) lösbar verbindbar ist, wobei das Sonnenrad des ersten Planetensatzes (P1) mittels der dritten Welle (3) über die erste Bremse (03) an das Gehäuse (G) des Getriebes ankoppelbar und über die erste Kupplung (13) mit der Antriebswelle (1) lösbar verbindbar ist, wobei das Sonnenrad des vierten Planetensatzes (P4), wobei die achte Welle (9) ständig mit dem Hohlrad des vierten Planetensatzes (P4) verbunden und über die vierte Kupplung (49) mit der vierten Welle (4) lösbar verbindbar ist.

2. Mehrstufengetriebe nach Anspruch 1, **dadurch gekennzeichnet , dass** die Planetensätze in der Reihenfolge vierter Planetensatz (P4), dritter Planetensatz (P3), zweiter Planetensatz (P2) und erster Planetensatz (P1) angeordnet sind.

3. Mehrstufengetriebe nach Anspruch 1, **dadurch gekennzeichnet, dass** die den Vorschaltradsatz bildenden Planetensätze (P1, P2) radial betrachtet übereinander angeordnet sind.

4. Mehrstufengetriebe nach Anspruch 1 oder 3, **dadurch gekennzeichnet, dass** die den Hauptradsatz bildenden Planetensätze (P3, P4) radial betrachtet übereinander angeordnet sind.

5. Mehrstufengetriebe nach einem der vorangehenden Ansprüche, **dadurch gekennzeichnet, dass** die dritte Kupplung (18) axial betrachtet zwischen dem Hauptradsatz und dem Vorschaltradsatz angeordnet ist.

6. Mehrstufengetriebe nach Anspruch 5, **dadurch gekennzeichnet, dass** die zweite Kupplung (16) axial betrachtet zwischen dem Hauptradsatz und dem Vorschaltradsatz angeordnet ist.

7. Mehrstufengetriebe nach Anspruch 6, **dadurch gekennzeichnet, dass** die erste Kupplung (13) axial betrachtet zwischen dem Hauptradsatz und dem Vorschaltradsatz angeordnet ist.

8. Mehrstufengetriebe nach Anspruch 7, **dadurch gekennzeichnet, dass** die erste und die zweite Kupplung (13, 16) als Lamellenschaltelemente einen gemeinsamen Außenlamellenträger aufweisen.

9. Mehrstufengetriebe nach Anspruch 6, 7 oder 8, **dadurch gekennzeichnet, dass** die Abtriebswelle (2) durch den vierten Planetensatz (P4) hindurchgeführt wird.

10. Mehrstufengetriebe nach einem der vorangehenden Ansprüche, **dadurch gekennzeichnet, dass** die dritte Kupplung (18) und/oder die vierte Kupplung (49) als Klauenschaltelemente ausgeführt sind, wobei die erste und zweite Kupplung (13, 16) und die erste und zweite Bremse (03, 05) als Reibschaltelemente ausgeführt sind.

11. Mehrstufengetriebe nach einem der vorangehenden Ansprüche, **dadurch gekennzeichnet, dass** neun Vorwärtsgänge realisierbar sind, wobei sich der erste Gang durch Schließen der dritten und vierten Kupplung (18, 49) und der zweiten Bremse (05), der zweite Gang durch Schließen der ersten Bremse (03) und der dritten und vierten Kupplung (18, 49), der dritte Gang durch Schließen der ersten, dritten und vierten Kupplung (13, 18, 49) und der vierte Gang durch Schließen der zweiten und vierten Kupplung (16, 49) und optional eines der Schaltelemente erste Bremse (03), zweite Bremse (05), erste Kupplung (13) oder dritte Kupplung (18), der fünfte Gang durch Schließen der ersten, zweiten und dritten Kupplung (13), (16) und (18), der sechste Gang durch Schließen der ersten Bremse (03) und der zweiten und dritten Kupplung (16, 18), der siebte Gang durch Schließen der zweiten Bremse (05) und der zweiten und dritten Kupplung (16, 18), der achte Gang durch Schließen der ersten und zweiten Bremse (03, 05) und der zweiten Kupplung (16) und der
neunte Gang durch Schließen der zweiten Bremse (05) und der ersten und zweiten Kupplung (13, 16) ergibt.

12. Mehrstufengetriebe nach einem der vorangehenden Ansprüche, **dadurch gekennzeichnet, dass** sich der Rückwärtsgang durch Schließen der zweiten Bremse (05) und der ersten und vierten Kupplung (13, 49) ergibt.

13. Mehrstufengetriebe nach einem der vorangehenden Ansprüche, **dadurch gekennzeichnet, dass** das Anfahren mittels eines Schaltelements (05, 49) des Getriebes erfolgt.

14. Mehrstufengetriebe nach einem der vorangehenden Ansprüche, **dadurch gekennzeichnet, dass** auf jeder Welle als Generator und/oder als zusätzliche Antriebsmaschine eine elektrische Maschine anbringbar ist.

## Claims

1. Multi-stage gearbox of planetary construction, in particular automatic gearbox for a motor vehicle, comprising a drive input shaft (1) and a drive output shaft (2) which are arranged in a housing (G), four planet sets (P1, P2, P3, P4), and six shift elements, comprising a first brake (03), a second brake (05), a first clutch (13), a second clutch (16) and a third clutch (18), the selective engagement of which generates different transmission ratios between the drive input shaft (1) and the drive output shaft (2) such that nine forward gears and one reverse gear can be implemented, wherein the first and the second planet set (P1, P2) form an upstream gear set and the third and the fourth planet set (P3, P4) form the main gear set, wherein seven rotatable shafts are provided, specifically a first shaft (1), a second shaft (2), a third shaft (3), a fourth shaft (4), a fifth shaft (5), a sixth shaft (6) and a seventh shaft (8), wherein the internal gear of the second planet set (P2) can be coupled to the housing (G) of the gearbox via the fifth shaft (5) by means of the second brake (05), wherein the sixth shaft (6) is permanently connected to the web of the third planet set (P3) and is detachably connectable to the drive input shaft (1) by means of the second clutch (16), and wherein the drive output shaft (2) is permanently connected to the internal gear of the third planet set (P3) and to the web of the fourth planet set (P4), **characterized in that** a fourth clutch (49) is provided, **in that** the first and the second planet gear set form a switchable upstream gear set, an eighth shaft (9) is provided, wherein the webs of the first and of the second planet set (P1, P2) are coupled to one another via the fourth shaft (4) which is connected to the sun gear of the third planet set (P3), wherein the internal gear of the first planet set (P1) is coupled to the sun gear of the second planet set (P2) via the seventh shaft (8) which is detachably connectable to the drive input shaft (1) by means of the third clutch (18), wherein the sun gear of the first planet set (P1) can be coupled to the housing (G) of the gearbox via the third shaft (3) by means of the first brake (03) and is detachably connectable to the drive input shaft (1) by means of the first clutch (13), wherein the sun gear of the fourth planet set (P4) is permanently coupled to the housing (G) of the gearbox via a non-rotatable ninth shaft (7), wherein the eighth shaft (9) is permanently connected to the internal gear of the fourth planet set (P4) and is detachably connectable to the fourth shaft (4) by means of the fourth clutch (49).

2. Multi-stage gearbox according to Claim 1, **characterized in that** the planet sets are arranged in the following sequence: fourth planet set (P4), third planet set (P3), second planet set (P2) and first planet set (P1) .

3. Multi-stage gearbox according to Claim 1, **characterized in that** the planet sets (P1, P2) which form the upstream gear set are arranged one above the other as viewed radially.

4. Multi-stage gearbox according to Claim 1 or 3, **characterized in that** the planet sets (P3, P4) which form the main gear set are arranged one above the other as viewed radially.

5. Multi-stage gearbox according to one of the preceding claims, **characterized in that** the third clutch (18) is arranged between the main gear set and the upstream gear set as viewed axially.

6. Multi-stage gearbox according to Claim 5, **characterized in that** the second clutch (16) is arranged between the main gear set and the upstream gear set as viewed axially.

7. Multi-stage gearbox according to Claim 6, **characterized in that** the first clutch (13) is arranged between the main gear set and the upstream gear set as viewed axially.

8. Multi-stage gearbox according to Claim 7, **characterized in that** the first and the second clutch (13, 16), as multiplate shift elements, have a common outer plate carrier.

9. Multi-stage gearbox according to Claim 6, 7 or 8, **characterized in that** the drive output shaft (2) is guided through the fourth planet set (P4).

10. Multi-stage gearbox according to one of the preceding claims, **characterized in that** the third clutch (18) and/or the fourth clutch (49) are in the form of claw-type shift elements, wherein the first and second clutch (13, 16) and the first and second brake (03, 05) are in the form of friction-type shift elements.

11. Multi-stage gearbox according to one of the preceding claims, **characterized in that** nine forward gears can be implemented, wherein the first gear is realized by closing the third and the fourth clutch (18, 49) and the second brake (05); the second gear is realized by closing the first brake (03) and the third and the fourth clutch (18, 49); the third gear is realized by closing the first, the third and the fourth clutch (13, 18, 49); the fourth gear is realized by closing the second and the fourth clutch (16, 49) and optionally one of the following shift elements: first brake (03), second brake (05), first clutch (13) or third clutch (18); the fifth gear is realized by closing the first, the second and the third clutch (13), (16) and (18); the sixth gear is realized by closing the first brake (03) and the second and the third clutch (16, 18); the seventh gear is realized by closing the second brake (05) and the second and the third clutch (16, 18); the eighth gear is realized by closing the first and the second brake (03, 05) and the second clutch (16); and the ninth gear is realized by closing the second brake (05) and the first and the second clutch (13, 16).

12. Multi-stage gearbox according to one of the preceding claims, **characterized in that** the reverse gear is realized by closing the second brake (05) and the first and the fourth clutch (13, 49).

13. Multi-stage gearbox according to one of the preceding claims, **characterized in that** starting is performed by means of a shift element (05, 49) of the gearbox.

14. Multi-stage gearbox according to one of the preceding claims, **characterized in that** an electric machine can be mounted, as a generator and/or as an additional drive machine, on each shaft.

## Revendications

1. Transmission à rapports multiples de construction planétaire, en particulier transmission automatique pour un véhicule automobile, comprenant un arbre d'entraînement (1) et un arbre de sortie (2), qui sont disposés dans un boîtier (G), quatre trains planétaires (P1, P2, P3, P4), ainsi que six éléments de changement de vitesse comprenant un premier frein (03), un deuxième frein (05), un premier embrayage (13), un deuxième embrayage (16) et un troisième embrayage (18), dont l'engagement sélectif provoque différents rapports de multiplication entre l'arbre d'entraînement (1) et l'arbre de sortie (2), de sorte que neuf vitesses de marche avant et une vitesse de marche arrière puissent être réalisées, le premier et le deuxième train planétaire (P1, P2) formant un train de roues monté devant la transmission et le troisième et le quatrième train planétaire (P3, P4) formant le train de roues principal, sept arbres rotatifs étant prévus, à savoir un premier arbre (1), un deuxième arbre (2), un troisième arbre (3), un quatrième arbre (4), un cinquième arbre (5), un sixième arbre (6) et un septième arbre (8), la couronne du deuxième train planétaire (P2) pouvant être accouplée au moyen du cinquième arbre (5) par le biais du deuxième frein (05) au boîtier (G) de la transmission, le sixième arbre (6) étant connecté en permanence au porte-satellites du troisième train planétaire (P3) et pouvant être connecté de manière amovible par le biais du deuxième embrayage (16) à l'arbre d'entraînement (1), et l'arbre de sortie (2) étant connecté en permanence à la couronne du troisième train planétaire (P3) et au porte-satellites du quatrième train planétaire (P4), **caractérisée en ce qu'**un quatrième embrayage (49) est prévu, **en ce que** le premier et le deuxième train planétaire forment un train de roues commutable monté devant la transmission, un huitième arbre (9) est prévu, les porte-satellites du premier et du deuxième train planétaire (P1, P2) étant accouplés l'un à l'autre par le biais du quatrième arbre (4), qui est connecté à la roue solaire du troisième train planétaire (P3), la couronne du premier train planétaire (P1) étant accouplée à la roue solaire du deuxième train planétaire (P2) par le biais du septième arbre (8), qui peut être connecté de manière amovible par le biais du troisième embrayage (18) à l'arbre d'entraînement (1), la roue solaire du premier train planétaire (P1) pouvant être accouplée au moyen du troisième arbre (3) par le biais du premier frein (03) au boîtier (G) de la transmission et pouvant être connectée de manière amovible par le biais du premier embrayage (13) à l'arbre d'entraînement (1), la roue solaire du quatrième train planétaire (P4) étant accouplée en permanence au boîtier (G) de la transmission par le biais d'un neuvième arbre (7) non rotatif, et le huitième arbre (9) étant connecté en permanence à la couronne du quatrième train planétaire (P4) et pouvant être connecté de manière amovible par le biais du quatrième embrayage (49) au quatrième arbre (4).

2. Transmission à rapports multiples selon la revendication 1, **caractérisée en ce que** les trains planétaires sont disposés dans l'ordre suivant : quatrième train planétaire (P4), troisième train planétaire (P3), deuxième train planétaire (P2) et premier train planétaire (P1).

3. Transmission à rapports multiples selon la revendication 1, **caractérisée en ce que** les trains planétaires (P1, P2) formant le train de roues monté devant la transmission sont disposés l'un au-dessus de l'autre, vu dans la direction radiale.

4. Transmission à rapports multiples selon la revendication 1 ou 3, **caractérisée en ce que** les trains planétaires (P3, P4) formant le train de roues principal sont disposés l'un au-dessus de l'autre, vu dans la direction radiale.

5. Transmission à rapports multiples selon l'une quelconque des revendications précédentes, **caractérisée en ce que** le troisième embrayage (18) est disposé entre le train de roues principal et le train de roues monté devant la transmission, vu dans la direction axiale.

6. Transmission à rapports multiples selon la revendication 5, **caractérisée en ce que** le deuxième embrayage (16) est disposé entre le train de roues principal et le train de roues monté devant la transmission, vu dans la direction axiale.

7. Transmission à rapports multiples selon la revendication 6, **caractérisée en ce que** le premier embrayage (13) est disposé entre le train de roues principal et le train de roues monté devant la transmission, vu dans la direction axiale.

8. Transmission à rapports multiples selon la revendication 7, **caractérisée en ce que** le premier et le deuxième embrayage (13, 16) présentent, en tant qu'éléments de commutation à disques, un support de disques externes commun.

9. Transmission à rapports multiples selon la revendication 6, 7 ou 8, **caractérisée en ce que** l'arbre de sortie (2) est guidé à travers le quatrième train planétaire (P4).

10. Transmission à rapports multiples selon l'une quelconque des revendications précédentes, **caractérisée en ce que** le troisième embrayage (18) et/ou le quatrième embrayage (49) sont réalisés sous forme d'éléments de commutation à griffes, le premier et le deuxième embrayage (13, 16) et le premier et le deuxième frein (03, 05) étant réalisés sous forme d'éléments de commutation à friction.

11. Transmission à rapports multiples selon l'une quelconque des revendications précédentes, **caractérisée en ce que** neuf vitesses de marche avant peuvent être réalisées, la première vitesse étant obtenue par fermeture du troisième et du quatrième embrayage (18, 49) et du deuxième frein (05), la deuxième vitesse étant obtenue par fermeture du premier frein (03) et du troisième et du quatrième embrayage (18, 49), la troisième vitesse étant obtenue par fermeture du premier, du troisième et du quatrième embrayage (13, 18, 49) et la quatrième vitesse étant obtenue par fermeture du deuxième et du quatrième embrayage (16, 49) et optionnellement de l'un des éléments de commutation suivants : le premier frein (03), le deuxième frein (05), le premier embrayage (13) ou le troisième embrayage (18), la cinquième vitesse étant obtenue par fermeture du premier, du deuxième et du troisième embrayage (13), (16) et (18), la sixième vitesse étant obtenue par fermeture du premier frein (03) et du deuxième et du troisième embrayage (16, 18), la septième vitesse étant obtenue par fermeture du deuxième frein (05) et du deuxième et du troisième embrayage (16, 18), la huitième vitesse étant obtenue par fermeture du premier et du deuxième frein (03, 05) et du deuxième embrayage (16) et la neuvième vitesse étant obtenue par fermeture du deuxième frein (05) et du premier et du deuxième embrayage (13, 16).

12. Transmission à rapports multiples selon l'une quelconque des revendications précédentes, **caractérisée en ce que** la vitesse de marche arrière est obtenue par fermeture du deuxième frein (05) et du premier et du quatrième embrayage (13, 49).

13. Transmission à rapports multiples selon l'une quelconque des revendications précédentes, **caractérisée en ce que** le démarrage s'effectue au moyen d'un élément de commutation (05, 49) de la transmission.

14. Transmission à rapports multiples selon l'une quelconque des revendications précédentes, **caractérisée en ce que** sur chaque arbre peut être montée une machine électrique en tant que générateur et/ou en tant que machine d'entraînement supplémentaire.
